Europäisches Patentamt

European Patent Office

Office européen des brevets

(19)

(11) Numéro de publication: **0 116 507**
**B1**

(12) **FASCICULE DE BREVET EUROPEEN**

(45) Date de publication du fascicule du brevet:
**29.10.86**

(51) Int. Cl.⁴: **A 61 C 11/00**

(21) Numéro de dépôt: **84420003.0**

(22) Date de dépôt: **10.01.84**

(54) **Articulateur pour l'art dentaire.**

(30) Priorité: **12.01.83 FR 8300793**

(43) Date de publication de la demande:
**22.08.84 Bulletin 84/34**

(45) Mention de la délivrance du brevet:
**29.10.86 Bulletin 86/44**

(84) Etats contractants désignés:
**BE CH DE GB IT LI LU NL SE**

(56) Documents cités:
**DE - A - 3 036 109**
**FR - A - 2 431 855**
**NL - A - 8 006 043**
**US - A - 3 159 915**
**US - A - 4 365 955**

(73) Titulaire: **FABRICATIONS AUTOMATIQUES GERBELOT,**
**647, chemin de l'Epinette, F-74300 Cluses (FR)**

(72) Inventeur: **Gerbelot-Barrillon, Pierre, 683, chemin de**
**l'Epinette, F-74300 Cluses (FR)**

(74) Mandataire: **de Beaumont, Michel, Cabinet Poncet**
**B.P. 317, F-74008 Annecy Cédex (FR)**

## Description

La présente invention concerne les articulateurs pour l'art dentaire, utilisés pour la réalisation de travaux d'analyses occlusales et de prothèses dentaires.

Ces appareils permettent, en servant de supports à des moulages de mâchoire inférieures et supérieures, de reproduire les mouvements mandibulaires.

Les articulateurs habituellement utilisés comprennent une platine inférieure dont la partie antérieure supporte un plateau incisif, et dont la partie postérieure comprend des branches verticales supportant deux boules condyliennes formant rotules sur lesquelles s'articule un membre supérieur. Le membre supérieur comporte un moyeu postérieur muni de logements appropriés pour enfermer les boules condyliennes et former articulation. Une platine supérieure, solidaire du moyeu, reçoit dans sa partie antérieure une tige incisive venant en appui sur le plateau incisif pour positionner le membre supérieur par rapport à la platine inférieure.

Pour reproduire les mouvements de la mâchoire, les logements du moyeu sont habituellement limités par une rampe de guidage supérieure plane inclinée vers l'avant d'un angle reproduisant la pente condylienne; une rampe latérale extérieure, ou aile de BENNETT, ouverte vers l'avant d'un angle reproduisant l'angle de BENNETT, limite le mouvement de la boule vers l'extérieur; une paroi postérieure limite les mouvements de la boule vers l'arrière tout en permettant les mouvements transversaux. Les moulages de mâchoires inférieures et supérieures sont adaptés sur le dispositif au moyen de plaques de montage se fixant sur la partie centrale de la platine inférieure et de la platine supérieure.

Le brevet français FR-A-2 431 855 décrit un tel articulateur dans lequel on a prévu en outre de rendre réglables part translation latérale les ailes de BENNETT par rapport au logement du moyeu: un rapprochement des deux ailes de BENNETT l'une vers l'autre, en relation avec un écartement constant des boules condyliennes, réalise un jeu qui permet de reproduire le mouvement dit de déplacement latéral immédiat, c'est à dire une translation transversale du membre supérieur par rapport au membre inférieur, les boules condyliennes restant en contact de la paroi postérieure, avant de reproduire un mouvement de BENNETT par glissement d'une boule contre l'aile de BENNETT correspondante.

Dans ce document on a également décrit des moyens pour bloquer sélectivement en relation centrée le moyeu. On entend par blocage sélectif en relation centrée une fonction selon laquelle l'utilisateur, après avoir choisi un déplacement latéral immédiat de valeur déterminée, peut de façon instantanée empêcher momentanément la translation transversale pour reproduire un mouvement de rotation pure centrée du membre supérieur par rapport au membre inférieur, et peut ensuite de façon instantanée permettre à nouveau la translation transversale sans avoir à régler une seconde fois sa valeur. Les moyens décrits dans ce document comprennent une tige solidaire d'une traverse intermédiaire du membre inférieur, et venant porter de façon sélective dans une gorge périphérique circulaire ménagée sur le moyeu. L'articulateur décrit comprend ainsi des moyens pour permettre un déplacement latéral immédiat du membre supérieur et des moyens pour obtenir sélectivement son blocage en relation centrée.

Toutefois une telle disposition conduit à la réalisation d'articulateurs onéreux, car la reproduction du mouvement de déplacement latéral immédiat nécessite l'utilisation de logements relativement complexes. Le nombre de pièces usinées avec précision est relativement important, ce qui conduit à un coût élevé. La traverse intermédiaire ou la tige qui lui est associée empêche ou gêne considérablement l'accès aux prothèses par l'arrière de l'appareil. Les réglages nécessitent la manipulation de plusieurs organes: les ailes de BENNETT pour le choix de l'amplitude de translation, et la tige pour le blocage ou le déblocage.

Le brevet NL-A-8 006 043 décrit un articulateur dans lequel les boules condyliennes sont solidaires du membre supérieur et s'engagent dans des logements solidaires du membre inférieur. Les boules condyliennes ont un écartement réglable. Elles sont pour cela montées chacune sur des demi-axes coulissant dans le membre supérieur, écartés par un ressort et actionnés par des plaques coulissantes superposées. Ce dispositif permet le réglage du déplacement latéral immédiat, mais la rotation pure en centré ne peut être obtenue qu'en déplaçant les deux plaques coulissantes et en perdant ainsi l'information de la valeur précédente du déplacement latéral. Le dispositif ne permet pas le blocage sélectif en relation centrée.

La présente invention a notamment pour objet d'échapper aux inconvénients des dispositifs connus en proposant un articulateur permettant de façon simple le réglage des mouvements de déplacement latéral immédiat avec blocage sélectif en relation centrée par manipulation d'un seul organe.

Un autre objet de la présente invention est de réaliser des articulateurs dont les dispositifs de blocage en relation centrée soient particulièrement simples, faciles et rapides à utiliser, ne gênent pas l'accès par l'arrière de l'articulateur, et conduisent à utiliser un nombre minimum de pièces usinées avec précision.

Un autre objet de l'invention est de proposer un articulateur dans lequel l'amplitude du mouvement de déplacement latéral immédiat est choisi égale à une valeur prédéterminée, correspondant à la majorité des cas rencontrés dans les morphologies humaines habituelles; le même articulateur peut en outre reproduire dex amplitdes différentes de déplacement latéral immédiat, couvrant la majorité des cas morphologiques pour des âges différents.

Un autre objet de l'invention est de proposer un articulateur dans lequel le dispositif de blocage en relation centrée puisse être associé à un dispositif permettant l'embrochage immédiat du membre supérieur sur le membre inférieur et son débrochage immédiat sans manipulation de leviers ou autres accessoires. L'articulateur ainsi conçu est très facile d'emploi par le fait que les valeurs préréglées de déplacement latéral immédiat, d'angle de BENNETT et de pente condylienne réduisent considérablement les réglages nécessaires pour l'utilisation de l'appareil.

Les valeurs préréglées ainsi définies, identiques pour tous les appareils d'une même série, permettent à l'utilisateur d'utiliser successivement et indifféremment plusieurs articulateurs pour travailler la même prothèse.

Pour réaliser ces objets ainsi que d'autres, la présente invention prévoit, selon l'une de ses caractéristiques, que les logements dans lesquels viennent se loger les boules condyliennes sont limités par une paroi supérieure, des ailes de BENNETT, et une paroi postérieure. Le blocage sélectif en relation centrée est assuré au moyen de deux tiges coulissant transversalement dans le moyeu, c'est à dire parallèlement à l'axe de moyeu et symétriquement par rapport au plan longitudinal médian du membre supérieur. Les tiges sont mobiles entre une position resserrée dans laquelle elles libèrent les boules condyliennes, permettant le déplacement latéral immédiat du membre supérieur par le fait que l'écartement des boules condyliennes est supérieur à l'écartement des ailes de BENNET, et entre une position écartée dans laquelle les tiges viennent en appui sans jeu contre les boules condyliennes. Un organe de manœuvre assure l'actionnement des tiges et leur maintien dans l'une ou l'autre position. Cette disposition permet de réaliser le blocage et le déblocage en relation centrée par manipulation d'un seul organe de manœuvre, libérant ou bloquant les deux boules condyliennes à la fois. L'utilisateur peut ainsi libérer l'une de ses deux mains.

Selon une autre caractéristique de l'invention, l'organe de manœuvre comprend une pièce d'écartement, déplaçable perpendiculairement à l'axe des tiges par l'utilisateur et s'insérant entre les deux extrémités intérieures des tiges pour les repousser vers l'extérieur par ses faces d'appui. Les faces d'appui comportent une zone d'écartement réduit pour laisser les tiges en position resserrée lorsqu'elles sont en appui sur cette zone, et au moins une zone d'écartement plus important pour maintenir alors les tiges en position écartée. On réalise ainsi un dispositif fiable et particulièrement peu onéreux.

Selon une autre caractéristique de l'invention, la pièce d'écartement est de forme générale en coin. Cette disposition permet, par l'enfoncement progressif de la pièce d'écartement, de régler à volonté l'amplitude du déplacement latéral immédiat.

Selon une autre alternative, la pièce d'écartement comprend une première zone d'écartement réduit et constant, une seconde zone dont l'écartement est constant et supérieur de 2,5 millimètres environ par rapport à la première zone, et une troisième zone dont l'écartement est constant et supérieur de 4 millimètres environ par rapport à la première zone. Les zones se raccordent par des surfaces en coin amenant progressivement les extrémités des tiges d'une zone à l'autre. On réalise ainsi une pré-programmation de l'amplitude du mouvement de déplacement latéral immédiat, l'amplitude étant de 1,25 millimètres de chaque côté ou de 2 millimètres, ce qui permet de couvrir de façon simple la majorité des cas rencontrés en anatomie.

Selon une autre caractéristique de l'invention, les tiges sont sollicitées par des moyens élastiques tendant à les rapprocher l'une de l'autre. Cette disposition, associée notamment avec la disposition précédente dans laquelle la pièce d'écartement comprend une succession de paliers ou zones d'écartement constant, permet de réaliser à la fois le rappel automatique des tiges vers le centre et le freinage de la pièce d'écartement par frottement des extrémités des tiges sur les paliers.

Selon un premier mode de réalisation, les extrémités extérieures des tiges sont solidaires des ailes de BENNETT qui sont elles-mêmes mobiles en translation selon une direction tranversale. On règle ainsi directement la différence d'écartement entre les ailes de BENNETT et les boules condyliennes, réglant par là même le déplacement latéral immédiat.

Selon une autre vaiante, les ailes de BENNETT ont un écartement fixe et inférieur à l'écartement des boules condyliennes; les tiges traversent un alésage ménagé dans les ailes de BENNETT pour venir en appui, en position écartée, contre les ailes de BENNETT. Cette disposition conduit à des réalisations plus simples et moins onéreuses.

Dans ce mode de réalisation on prévoit en outre des moyens de réglage de l'écartement des boules condyliennes, pour permettre de moduler l'amplitude du déplacement latéral immédiat. Ces moyens de réglage permettent en outre de compenser les éventuelles déformations des membres inférieurs de l'articulateur, notamment suite à une chute ou un choc, pour ramener les boules condyliennes dans des positions symétriques et selon un écartement désiré. On prévoit pour cela des cales amovibles de centrage adaptables respectivement sur la platine supérieure et sur la platine inférieure de l'articulateur, et emboîtables l'une dans l'autre pour maintenir le membre supérieur en position centrée. Cette disposition, associée aux autres moyens permettant de réaliser des réglages prédéterminés, assure l'interchangeabilité des appareils.

D'autres caractéristiques et avantages de la présente invention ressortiront de la description suivante de modes de réalisation particuliers, faite en relation avec les figures jointes parmi lesquelles:

– la figure 1 représente une vue arrière d'un articulateur selon la présente invention;

– la figure 2 représente une vue de côté de l'articulateur de la figure 1;

– la figure 3 représente une vue de dessous d'un moyeu de membre supérieur selon la présente invention, les tiges étant en position rapprochée; et

— la figure 4 représente le même moyeu avec des tiges en position écartée.

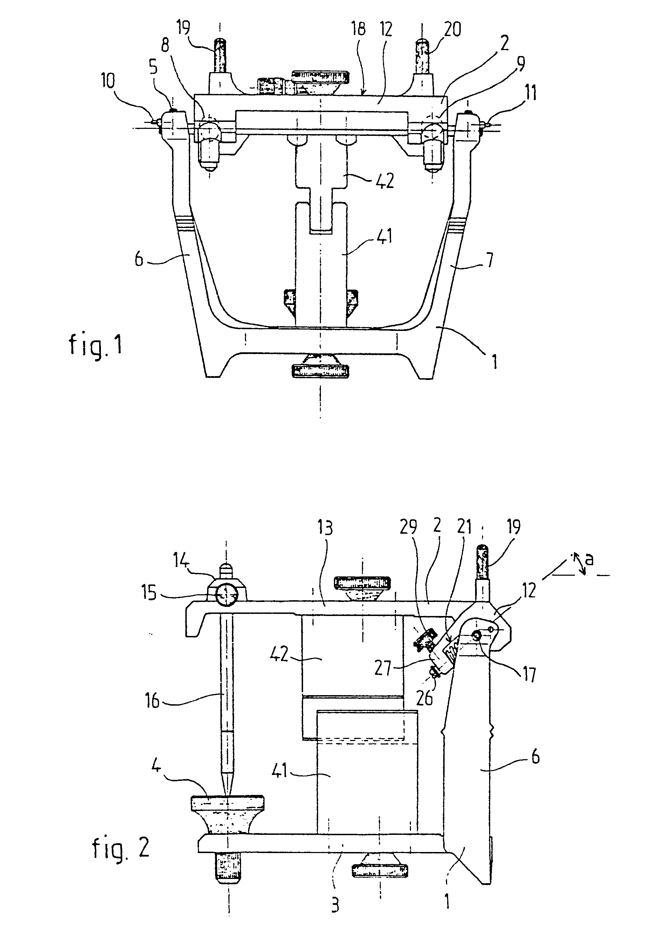

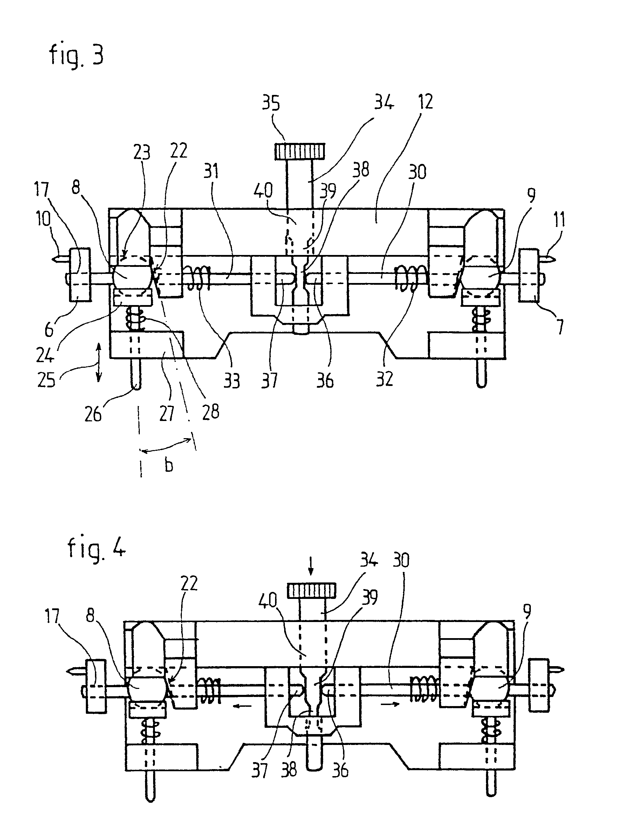

Comme le représentent les figures 1 et 3, l'articulateur comprend de façon générale un membre inférieur 1 sur lequel s'articule un membre supérieur 2. Le membre inférieur 1 comprend une platine inférieure 3 dont la partie antérieure supporte un plateau incisif 4. La partie centrale de la platine 3 permet l'adaptation d'une plaque de montage inférieure, non représentée sur la figure. La partie postérieure de la platine 3 se raccroche à deux branches verticales 6 et 7 dont les zones supérieures supportent chacune une boule condylienne respectivement 8 et 9. Les boules condyliennes sont disposées en regard l'une de l'autre et font saillie des faces intérieures des branches verticales 6 et 7. Elles sont solidaires d'un axe fixe coulissant dans un alésage correspondant 17 de la branche, alésage dans lequel les axes sont bloqués par des vis de blocage 5.

Sur la partie extérieur des branches sont fixés deux axes de pivotement 10 et 11 qui correspondent à l'axe auriculaire et permettent l'adaptation d'un arc facial.

Le membre supérieur 2 est embrochable sur les boules condyliennes 8 et 9, et comporte pour cela un moyeu 12 solidaire d'une platine supérieure 13. La partie antérieure de la platine 13 comporte un dispositif de guidage et de blocage 14 comportant un canon d'axe vertical et une vis de blocage 15 transversale. Une tige incisive 16 est introduite et bloquée dans le canon pour venir en appui sur le plateau incisif 4 et maintenir en position le membre supérieur.

La partie centrale de la platine supérieure 13 comporte un dispositif de positionnement sur lequel s'adapte une plaque de montage supérieure non représentée.

Le moyeu 12 comporte sur sa face supérieure 18 deux pieds de stabilisation 19 et 20, lesquels, en relation avec la tige incisive 16, permettent d'avoir une très bonne stabilité en position renversée du dispositif.

Comme le représentent les figures 3 et 4, le moyeu 12 comporte, au voisinage de chacune de ses extrémités, des logements appropriés pour enfermer les boules condyliennes. Les deux logements du moyeu ont une disposition symétrique par rapport à l'axe médian du dispositif, il est donc suffisant de décrire l'un des deux logements.

Les logements sont limités par une rampe de guidage supérieure plane 21, inclinée vers l'avant d'un angle a reproduisant la pente condylienne. Une rampe latérale extérieure 22, ou aile de BENNETT, est ouverte vers l'avant d'un angle b reproduisant l'angle de BENNETT. Le logement est en outre limité par une paroi postérieure 23 profilée de façon à permettre les mouvements transversaux des boules condyliennes.

Pour réaliser un articulateur d'emploi facile, les valeurs des angles a et b de pente condylienne et d'angle de BENNETT sont fixes. On choisira par exemple un angle de pente condylienne voisin de 40 degrés, et un angle de BENNETT voisin de 7 degrés, de façon à réaliser un dispositif permettant de traiter la plupart des cas rencontrés par le praticien.

Les logements sont en outre limités vers l'avant par une butée antérieure 24, mobile en translation selon un mouvement antéro-postérieur parallèle à la rampe de guidage supérieure 21 comme le représentent les doubles flèches 25. La butée antérieure 24 est mobile entre une première position dans laquelle elle repousse la boule condylienne contre la paroi postérieure du logement, et une seconde position dans laquelle elle libère la boule condylienne pour permettre ses mouvements et notamment son introduction et son retrait du moyeu. La butée 24 est guidée par une tige 26 traversant un épaulement antérieur 27 dans lequel elle peut être bloquée par une vis transversale 29. Un ressort 28 repousse la butée 24 vers l'arrière en direction de la paroi postérieure 23.

Le moyeu comprend en outre deux tiges 30 et 31 indépendantes, coulissant transversalement dans le moyeu parallèlement à son axe, traversant des alésages guides.

Dans un premier mode de réalisation, représenté sur les figures, les tiges 30 et 31 traversent des alésages correspondants ménagés dans les ailes de BENNETT fixes telles que l'aile 22. Les tiges sont mobiles entre une position resserrée, représentée sur la figure 3, dans laquelle elles libèrent les boules condyliennes, permettant le déplacement latéral immédiat du membre supérieur par le fait que l'écartement des boules condyliennes est supérieur à l'écartement des ailes de BENNETT. Les tiges peuvent prendre une position écartée, représentée sur la figure 4, dans laquelle elles viennent porter contre les boules condyliennes pour les maintenir sans jeu en une position symétrique par rapport au plan longitudinal médian du membre supérieur. Les tiges 30 et 31 sont sollicitées en permanence vers l'intérieur par des moyens élastiques tels que des ressorts hélicoïdaux 32 et 33.

Une pièce de manœuvre 34 assure le déplacement des tiges. Cette pièce 34 comprend des parties linéaires s'engageant dans des alésages correspondants du moyeu dans lesquels elles coulissent librement, l'action de l'utilisateur s'exerçant sur un bouton d'extrémité 35 accessible de l'extérieur. La pièce de manœuvre 34 est engagée entre les tiges 30 et 31, et comprend des faces extérieures d'appui contre lesquelles les extrémités intérieures 36 et 37 des tiges viennent porter sous l'action des ressorts 32 et 33. Ainsi, la pièce de manœuvre 34 est une pièce produisant l'écartement des tiges, par déplacement perpendiculairement à l'axe des tiges.

Dans le mode de réalisation représenté sur les figures, la pièce de manœuvre 34 comporte une zone d'écartement réduit 38. Les tiges sont en position resserrée lorsque cette zone d'écartement réduit 38 est en regard de leurs extrémités 36 et 37, comme le représente la figure 3. La pièce 34 comporte également une zone 39 d'écartement plus important qui, lorsqu'elle est engagée entre les tiges, permet de les repousser vers les boules condyliennes. Une troisième zone 40, d'écartement encore plus important, permet de repousser au maximum les tiges. Chacune des zones 38, 39 et 40 comporte un écartement constant, et se raccorde à la zone suivante par une portion conique ou en coin. On choisira par exemple une zone 38 dont l'écartement assure la libération totale des boules condyliennes par les tiges 32 et 33 dont les extrémités extérieures sont alors en affleurement dans l'alésage des ailes de BENNETT 22. L'écartement de la zone 39 pourra être choisi supérieur de 2,5 millimètres environ par rapport à l'écartement de la zone 38, et la zone 40 d'un écartement supérieur de 4 millimètres environ par rapport à la zone 38.

Pour effectuer les réglages, on utilise des cales amovibles de centrage 41 et 42, représentées sur les figures 1 et 2. Les cales amovibles 41 et 42 sont adaptables respectivement sur les platines inférieure 3 et supérieure 13, et conformées pour s'emboîter l'une dans l'autre comme le représentent les figures. Lorsqu'elles sont adaptées sur les platines, les cales maintiennent le membre supérieur 2 dans une position symétrique par rapport au plan de symétrie du membre inférieur 1, ou position centrée.

Le fonctionnement du dispositif est le suivant: supposons que l'on veuille régler l'articulateur avec un déplacement latéral immédiat de 1,25 millimètres. On adapte les cales 41 et 42 sur les platines correspondantes, on débloque les axes des boules condyliennes par les vis 5, on engage la pièce de manœuvre 34 de façon à disposer la zone 39 entre les tiges 32 et 33, on repousse les boules condyliennes 8 et 9 en appui contre les extrémités extérieures des tiges, et on bloque les axes des boules par les vis de blocage 5. L'articulateur est alors prêt à fonctionner: lorsque la pièce de manœuvre 34 est enfoncée, insérant la zone 39 entre les tiges, le membre supérieur est maintenu en position centrée par les tiges portant contre les deux boules condyliennes. Lorsqu'on retire la pièce de manœuvre 34, insérant la zone étroite 38 entre les tiges, les tiges s'escamotent et l'écartement des boules condyliennes devient supérieur à l'écartement des ailes de BENNET 23, produisant le déplacement latéral immédiat.

Selon un autre mode de réalisation, on peut utiliser une pièce de manœuvre 34 telle qu'une pièce conique ou en coin, ayant un écartement progressif, et repoussant les tiges progressivement au fur et à mesure de son déplacement. Il faut alors prévoir un moyen de blocage de la pièce de manœuvre 34, moyen de blocage non représenté sur les figures.

Selon un autre mode de résalisation, on rend mobiles les ailes de BENNETT 22, permettant leur translation selon une direction transversale c'est à dire parallèle à l'axe du moyeu 12. Les ailes de BENNETT 22 sont solidarisées à chaque extrémité des tiges 32 et 33, de sorte que le déplacement de la pièce de manœuvre 34 produise l'écartement ou le rapprochement des ailes de BENNETT elles-mêmes.

Avec les dispositions décrites précédemment, selon lesquelles l'écartement des boules condyliennes est réglable, les mêmes membres inférieurs peuvent servir pour la réalisation d'articulateurs sans déplacement latéral immédiat ou avec déplacement latéral immédiat. Il suffit en effet de permettre ou d'interdire le déblocage des vis 5. En outre, les vis de blocage 5 peuvent servir à régler en usine l'écartement des boules condyliennes, et ainsi diminuer les tolérances nécessaires d'usinage des pièces mécaniques, le réglage permettant de rattraper les écarts. Les mêmes vis de blocage permettent la réalisation d'articulateurs complets, avec déplacement latéral immédiat, et donc sans nécessiter de pièces supplémentaires.

La présente invention n'est pas limitée aux modes de réalisation qui ont été explicitement décrits, mais elle en inclut les diverses variantes et généralisations contenues dans le domaine des revendications ci-après. On pourra notamment utiliser une pièce de manœuvre 34 de révolution, c'est à dire admettant un axe de révolution longitudinal, coulissant dans des alésages cylindriques correspondants ménagés dans les parois du moyeu. La réalisation en est ainsi plus simple, et une rotation du bouton 35 reste sans effet sur l'écartement des tiges.

**Revendications**

1. Appareil articulateur pour l'art dentaire, notamment pour la réalisation de travaux d'analyses occlusales et de prothèses dentaires, ledit appareil comprenant un membre inférieur (1) dont la partie antérieure forme platine inférieure (3), destinée à supporter un moulage de mâchoire inférieure et supporte un plateau incisif (4), et dont la partie postérieure comprend deux branches latérales (6, 7) supportant chacune une boule condylienne (8, 9) lesdites boules formant rotules sur lesquelles s'articule un membre supérieur (2) comportant un moyeu postérieur (12) muni de logements appropriés pour enfermer les boules condyliennes, le membre supérieur comportant une platine supérieure (13) solidaire du moyen et déstinée à supporter un moulage de mâchoire supérieure et dont la partie antérieure reçoit une tige incisive (16) venant en appui sur le plateau incisif (14), les logements du moyeu étant limités par une rampe de guidage supérieure plane (21) inclinée vers l'avant d'un angle (a) reproduisant la pente condylienne, par une rampe de guidage latérale (22) ou aile de BENNETT, et par une paroi postérieure (23) servant de guidage aux mouvements transversaux du membre supérieur (2) par rapport aux boules condyliennes, l'articulateur comprenant en outre des moyens pour obtenir sélectivement son blocage en relation centrée, caractérisé en ce que le blocage en relation centrée est assuré au moyen de deux tiges (30, 31) coulissant transversalement et symétriquement par rapport au plan longitudinal médian du membre supérieur dans le moyeu (12) et venant normalement en appui contre les boules condyliennes, lesdites tiges étant mobiles entre une position resserrée dans laquelle elles libèrent les boules condyliennes (8, 9), permettant le déplacement latéral immédiat du membre supérieur (2) par le fait que l'écartement des boules condyliennes est supérieur à l'écartement des ailes de BENNETT, et une position écartée dans laquelle les extrémités extérieures des tiges viennent en appui sans jeu contre les boules condyliennes, un organe de manœuvre (34) assurant l'actionnement des tiges et leur maintien dans l'une ou l'autre position.

2. Articulateur selon la revendication 1, caractérisé en ce que l'organe de manœuvre comprend une pièce d'écartement (34) déplaçable perpendiculairement à l'axe des tiges par l'utilisateur et s'insérant entre les deux extrémités intérieures (36, 37) des tiges (30, 31) pour les repousser vers l'extérieur par ses faces d'appui, les faces d'appui comportant une zone (38) d'écartement réduit pour laisser les tiges en position resserrée lorsqu'elles sont en appui sur cette zone, et au moins une zone (39) d'écartement plus important pour maintenir les tiges en position écartée.

3. Articulateur selon la revendication 2, caractérisé en ce que la pièce d'écartement (34) est de forme générale en coin.

4. Articulateur selon la revendication 2, caractérisé en ce que la pièce d'écartement comprend une première zone (38) d'écartement réduit et constant, une seconde zone (39) dont l'écartement est constant et supérieur de 2,5 millimètres environ par rapport à la première zone, et une troisième zone (40) dont l'écartement est constant et supérieur de 4 millimètres environ par rapport à la première zone, les zones se raccordant par des surfaces en coin.

5. Articulateur selon l'une des revendications 3 ou 4, caractérisé en ce que les tiges (30, 31) sont sollicitées par des moyens élastiques (32, 33) tendant à les rapprocher l'une de l'autre.

6. Articulateur selon l'une quelconque des revendications 2 à 5, caractérisé en ce que la pièce de manœuvre (34) est une pièce de révolution coulissant dans des alésages guides ménagés dans les parois de moyeu.

7. Articulateur selon l'une quelconque des revendications 1 à 6, caractérisé en ce que les extrémités extérieures des tiges sont solidaires des ailes de BENNETT (22) qui sont elles-mêmes mobiles en translation selon une direction transversale.

8. Articulateur selon l'une quelconque des revendications 1 à 6, caractérisé en ce que les tiges (30, 31) traversent chacune un alésage ménagé parallèlement à l'axe du moyeu dans les ailes de BENNETT (22).

9. Articulateur selon la revendication 8, caractérisé en ce qu'il comprend en outre des moyens de réglage (5, 17) de l'écartement des boules condyliennes (8, 9).

10. Articulateur selon la revendication 9, caractérisé en ce qu'il comprend en outre des cales amovibles (41, 42) de centrage adaptables respectivement sur la platine inférieure (3) et sur la platine supérieure (13) et emboîtables l'une dans l'autre pour maintenir le membre supérieure en position centrée.

## Patentansprüche

1. Zahnärztlicher Artikulator, insbesondere zur Durchführung von Arbeiten von Zahnstellungsuntersuchungen und Zahnprothesen, der ein unteres Glied (1) aufweist, dessen vorderes Teil eine untere Platte (3) bildet, die dazu bestimmt ist, eine Unterkieferform zu tragen, und eine Schneidezahnplatte (4) trägt, und dessen hinteres Teil zwei seitliche Zweige (6, 7) aufweist, die jeweils eine Gelenkkopfkugel (8, 9) tragen, wobei diese Kugeln Kugelkopfgelenke bilden, auf denen ein oberes Glied (2) angelenkt ist, das eine hintere Nabe (12) aufweist, die mit geeigneten Lagerungen versehen ist, um die Gelenkkopfkugeln einzuschliessen, wobei das obere Glied eine obere Platte (13) aufweist, die einstückig mit der Nabe ist und dazu bestimmt ist, eine Oberkieferform zu tragen und deren vorderes Teil eine Schneidezahnstange (16) aufnimmt, die in Auflage ist auf der Schneidezahnplatte (4), wobei die Lagerungen der Nabe begrenzt werden durch eine obere ebene Führungsrampe (21), die nach vorne um einen Winkel (a) ansteigt, der die Gelenkkopfneigung wiedergibt, durch eine seitliche Führungsrampe (22) oder BENNETT-Flansch und durch eine hintere Wand (23), die zur Führung von Querbewegungen des oberen Gliedes (2) in Beziehung zu den Gelenkkopfkugeln dient, wobei der Artikulator weiterhin Einrichtungen aufweist, um selektiv seine Blockierung in zentrierter Beziehung zu erhalten, dadurch gekennzeichnet, dass die Blockierung in zentrierter Beziehung sichergestellt wird mittels zweier Stangen (30, 31), die quer und symmetrisch in Beziehung zur mittleren Längsebene des oberen Gliedes in der Nabe (12) gleiten und normalerweise in Auflage kommen gegen die Gelenkkopfkugeln, wobei die Stangen beweglich sind zwischen einer verkürzten Position, in der sie die Gelenkkopfkugeln (8, 9) befreien und den direkten seitlichen Versatz des oberen Gliedes (2) erlauben durch die Tatsache, dass die Entfernung zwischen den Gelenkkopfkugeln grösser ist als die Entfernung der BENNETT-Flansche, und einer gespreizten Position, in der die äusseren Enden der Stange ohne Spiel in Auflage kommen gegen die Gelenkkopfkugeln, wobei eine Betätigungsvorrichtung (34) die Betätigung der Stangen und ihr Halten in der einen oder anderen Lage sicherstellt.

2. Artikulator nach Anspruch 1, dadurch gekennzeichnet, dass die Betätigungsvorrichtung ein Spreizteil (34) aufweist, das senkrecht zur Achse der Stangen durch den Benutzer versetzbar ist und sich einfügt zwischen die beiden inneren Enden (36, 37) der Stangen (30, 31), um sie nach aussen zurückzustossen durch ihre Andruckflächen, wobei die Andruckflächen eine Zone (38) mit verminderter Spreizung aufweisen, um die Stangen in verkürzter Lage zu lassen, wenn sie in Auflage auf dieser Zone sind und mindestens eine Zone (39) mit bedeutender Spreizung, um die Stangen in gespreizter Lage zu halten.

3. Artikulator nach Anspruch 2, dadurch gekennzeichnet, dass das Spreizteil (34) im allgemeinen Keilform hat.

4. Artikulator nach Anspruch 2, dadurch gekennzeichnet, dass das Spreizteil eine erste Zone

(38) mit verminderter und konstanter Spreizung, eine zweite Zone (39), deren Spreizung konstant und ungefähr 2,5 mm grösser ist im Verhältnis zur ersten Zone und eine dritte Zone (40) aufweist, deren Spreizung konstant und ungefähr 4 mm grösser ist im Verhältnis zur ersten Zone, wobei die Zonen durch keilförmige Flächen verbunden sind.

5. Artikulator nach einem der Ansprüche 3 oder 4, dadurch gekennzeichnet, dass die Stangen (30, 31) durch elastische Einrichtungen (32, 33) beansprucht werden, die darauf zielen, sie einander anzunähern.

6. Artikulator nach irgendeinem der Ansprüche 2 bis 5, dadurch gekennzeichnet, dass die Betätigungsvorrichtung (34) ein Umdrehungsteil ist, das in Führungsbohrungen gleitet, die in den Wänden der Nabe ausgespart sind.

7. Artikulator nach irgendeinem der Ansprüche 1 bis 6, dadurch gekennzeichnet, dass die äusseren Enden der Stange einteilig sind mit BENNETT-Flanschen (22), die selbst beweglich sind in Translation entlang einer Querrichtung.

8. Artikulator nach irgendeinem der Ansprüche 1 bis 6, dadurch gekennzeichnet, dass die Stangen (30, 31) jeweils eine Bohrung durchqueren, die parallel zur Achse der Nabe in den BENNETT-Flanschen (22) ausgespart ist.

9. Artikulator nach Anspruch 8, dadurch gekennzeichnet, dass er weiterhin eine Entfernungs-Einstelleinrichtung (5, 17) der Gelenkkopfkugeln (8, 9) aufweist.

10. Artikulator nach Anspruch 9, dadurch gekennzeichnet, dass er weiterhin verstellbare Zentrierstücke (41, 42) aufweist, die jeweils an die untere Platte (3) und an die obere Platte (13) anpassbar und ineinander einpassbar sind, um das obere Glied in zentrierter Lage zu halten.

**Claims**

1. An articulator apparatus for the dental art, in particular for carrying out occlusal analysis and dental prothesis, comprising a lower member (1) whose front part forms a lower platen (3) for supporting a lower jaw moulding, and supports an incisive plate (4), and whose rear part comprises two lateral legs (6, 7) each supporting one condylar ball (8, 9), said balls forming ball joints on which is articulated a higher member (2) comprising a rear hub (12) having appropriate housings for housing the condylar balls, the upper member comprising an upper platen (13) integral with the hub for supporting a higher jaw moulding and whose front part receives an incisive rod (16) bearing on the incisive plate (4), the housings of the hub being limited by a flat upper guide ramp (21) slanting forwardly by an angle (a) reproducing the condylar slope, by a lateral guide ramp (22) or BENNETT's wing, and by a rear wall (23) for guiding the tranverse movements of the upper member (2) with respect to the condylar balls, the articulator further comprising means for selectively obtaining locking thereof in centered relation, characterised in that the centered relation locking is provided by means of two rods (30, 31) sliding transversely and symmetrically with relation to the median longitudinal plane of the upper member in the hub (12) and usually bearing on the condylar balls, said rods being moveable between a closed up position in which they release the condylar balls (8, 9), allowing the immediate lateral displacement of the upper member (2) by the fact that the spacing between the condylar balls is greater than the spacing between BENNETT's wings, and a spaced apart position in which the outer ends of the rods bear without play against the condylar balls, a control member (34) operating the rods and holding them in one or other position.

2. The articulator according to claim 1, characterised in that control member comprises a spacing piece (34) moveable perpendicularly to the axis of the rods by the user and being inserted between the two inner ends (36, 37) of the rods (30, 31) so as to urge them back towards the outside by its bearing faces, the bearing faces comprising a reduced spacing zone (38) for leaving the rods in the closed up position when they are in abutment against this zone, and at least one larger spacing zone (39) for holding the rods in the spaced apart position.

3. The articulator as claimed in claim 2, characterised in that the spacing piece (34) is generally wedge shaped.

4. The articulator as claimed in claim 2, characterised in that said spacing piece comprises a first reduced and constant spacing zone (38), a second zone (39) whose spacing is constant and greater than about 2.5 millimeters with respect to the first zone and a third zone (40) whose spacing is constant and greater than about 4 millimeters with respect to the first zone, the zones being joined together by wedge shaped surfaces.

5. The articulator according to claims 3 or 4, characterised in that said rods (30, 31), are urged by resilient means (32, 33) tending to urge them close to one another.

6. The articulator as claimed in anyone of claims 2 to 5, characterised in that the control means (34) is a piece of revolution sliding in guide bores formed in the walls of the hub.

7. The articulator as claimed in anyone of claims 1 to 6, characterised in that outer ends of the rods are integral with the BENNETT wings (22) which are themselves moveable in translation in a transverse direction.

8. The articulator as claimed in anyone of claims 1 to 6, characterised in that said rods (30, 31) pass each through a bore formed parallel to the hub axis in the BENNETT wings (22).

9. The articulator as claimed in claim 8, characterised in that it further comprises means (5, 17) for adjusting the spacing of the condylar balls (8, 9).

10. The articulator as claimed in claim 9, characterised in that it further comprises moveable centering blocks (41, 42) which may be fitted respectively to the lower platen (3) and to the upper platen (13) and which fit one in the other for holding the upper member in the centered position.

7

fig.1

fig. 2

fig. 3

fig. 4